# EUROPÄISCHE PATENTSCHRIFT

(11) **EP 2 792 910 B1**
(45) Veröffentlichungstag und Bekanntmachung des Hinweises auf die Patenterteilung: **14.03.2018**
(21) Anmeldenummer: 14164526.7
(22) Anmeldetag: 14.04.2014
(51) Int. Cl.: F16H 59/02, G05G 1/04, G05G 9/047, G05G 5/05, F16H 61/22, F16H 61/24, F16H 59/04

(54) **Schalteinrichtung für ein Kraftfahrzeug mit einem Schalthebel**
Shifting device for a vehicle with a gear lever
Dispositif de commande de véhicule automobile doté d'un levier de changement de vitesse

(30) Priorität: 15.04.2013 DE 102013006346; 19.04.2013 DE 102013006731
(43) Veröffentlichungstag der Anmeldung: 22.10.2014
(73) Patentinhaber: Marquardt GmbH, 78604 Rietheim-Weilheim (DE)
(72) Erfinder: Roland, Buschle, 78570 Mühlheim (DE); Berchtold, Rainer, 78532 Tuttlingen (DE)
(74) Vertreter: Otten, Roth, Dobler & Partner mbB Patentanwälte

(56) Entgegenhaltungen:
- WO-A1-2011/023267
- DE-A1-102005 043 288
- DE-A1-102007 011 901
- DE-A1-102007 014 745
- DE-A1-102007 015 375
- DE-A1-102007 019 465
- DE-A1-102007 024 030
- DE-A1-102007 058 850
- DE-A1-102008 041 374

## Beschreibung

Die vorliegende Erfindung betrifft eine Schalteinrichtung für ein Kraftfahrzeug nach dem Oberbegriff des Anspruchs 1, wie aus der DE 10 2007 024030 A1 bekannt. Die Druckschrift DE 10 2007 024030 A1 offenbart eine Schalteinrichtung für ein Automatikgetriebe mit einer Sperrvorrichtung. Für die Rückstellung des Schalthebels ist ein Antriebselement vorgesehen, das unabhängig von dem Antrieb eines Sperrnockens wirkt.

Ein solcher Gegenstand wird weiterhin in der EP 1 848 903 offenbart. Diese Druckschrift zeigt eine elektrische Schalteinrichtung für ein Kraftfahrzeug, bei der über einen elektrischen Aktuator der Betätigungsweg eines Schalthebels begrenzt wird und zugleich eine Positionsveränderung des Schalthebels mittels dem gleichen Aktuator möglich ist.

Ein solcher Gegenstand nach dem Stand der Technik hat jedoch den Nachteil, dass die Positionsveränderung des Schalthebels auch gegen die Haltekraft einer Bedienperson einsetzen kann, die den Schalthebel manuell in einer betätigten Position hält. Dadurch kann es zu einer Schrecksituation oder zumindest zu einer Ablenkung der Bedienperson durch Einsetzen der angetriebenen Verschiebung des Schalthebels kommen.

Die Aufgabe der Erfindung ist es daher, ausgehend von diesem Stand der Technik eine Schalteinrichtung für ein Kfz zu schaffen, die diesen Nachteil vermeidet und sicherstellt, dass der Schalthebel nicht gegen eine manuelle Bedienungskraft zurückgestellt wird bzw. die Positionsveränderung des Schalthebels angesteuert ausgelöst wird. Die Lösung dieser Aufgabe erfolgt, ausgehend vom Oberbegriff des Anspruchs 1, durch dessen kennzeichnende Merkmale.

In den abhängigen Ansprüchen werden vorteilhafte und zweckmäßige Weiterbildungen angegeben.

Demnach betrifft die Erfindung eine Schalteinrichtung für ein Kraftfahrzeug mit einem Schalthebel und einem elektrischen Antriebselement zur Begrenzung eines Betätigungswegs des Schalthebels mittels eines vom Antriebselement angetriebenen Begrenzungselementes, wobei eine angetriebene Positionsveränderung des Schalthebels vorgesehen ist. Sie zeichnet sich dadurch aus, dass zur angetriebenen Positionsveränderung des Schalthebels ein vom elektrischen Antriebselement des Begrenzungselementes verschiedenes Antriebselement vorgesehen ist. Der Schalthebel kann dabei zum Schalten eines Schaltgetriebes vorgesehen oder als Wahlhebel eines Automatikgetriebes vorgesehen sein.

Durch die Ausbildung verschiedener Antriebselemente kann in vorteilhafter Weise eine Trennung zwischen einer Begrenzung des Betätigungswegs des Schalthebels und dessen Positionsveränderung aufgrund einer auf ihn wirkenden Antriebskraft bewirkt werden. Insbesondere ist es hierdurch möglich, Vorkehrungen zu treffen, dass das elektrische Antriebselement für das Begrenzungselement zur Begrenzung des Betätigungswegs des Schalthebels für bestimmte Betriebszustände, insbesondere auch während einer manuellen Betätigung, selbst blockiert bzw. außer Kraft gesetzt wird. Damit kann sichergestellt werden, dass das Begrenzungselement nicht ungewollt in den Betätigungsweg des Schalthebels geraten und diesen blockieren und/oder sogar in seiner Position verändern kann. Somit können Fehlfunktionen und damit einhergehende Gefahrensituationen zuverlässig ausgeschlossen werden, wie sie sich beispielsweise bei einem nicht vorgesehenen Einwirken des Begrenzungselementes auf den Schalthebel ergeben können.

Solche Situationen sind sowohl während der Betätigung des Schalthebels zur Vorwahl eines Ganges oder eines Betriebszustandes, z. B. im Falle eines Automatikgetriebes als auch in dessen vorgewähltem Positionszustand zumindest sehr irritierend und bieten ein hohes Gefahrenpotenzial.

Um sicherzustellen, dass die angetriebene Positionsveränderung des Schalthebels erst einsetzt, wenn die Bedienperson den Schalthebel loslässt, wird vorzugsweise ein mechanisches Rückstellelement als Antriebselement zur Positionsveränderung des Schalthebels, beispielsweise eine Feder, vorgesehen. Diese wird zum Beispiel entsprechend der Auslenkung des Schalthebels vorgespannt.

Um die Rückstellkraft und die Rückstellbewegung definiert vorzusehen, kann darüber hinaus ein vom Antriebselement zur Positionsveränderung des Schalthebels kraftbeaufschlagter, auf einer geneigten Fläche anliegender Stößel vorgesehen werden. Dieser Stößel kann auf der geneigten Fläche gleiten oder abrollen, z. B. wenn er entsprechend gelagert ist. Die geneigte Fläche muss nicht eben sein, sondern kann kulissenartig ausgebildet sein, um den Bewegungsablauf und/oder Kraftverlauf zu definieren.

Der Stößel kann beispielsweise in einer Längsachse des Schalthebels und/oder parallel hierzu als ein axial bewegliches, federbelastetes Element, z. B. als ein Taststift, vorgesehen sein, der auf einer Gegenfläche, z. B. in einer Nut geführt ist. Die Kontur der Gegenfläche kann in Bezug auf eine Schwenkachse des Schalthebels entlang der vom Taststift bei der Schwenkbewegung des Hebels abzufahrenden Kurve den Radius verkürzen und hierdurch eine schräge Anlagefläche oder ein Gegenlager für den Stift ausbilden. Hierdurch wird im ausgelenkten Zustand aufgrund der schrägen Komponente eine in Richtung der Schräge wirkende Quer- bzw. Rückstellkraft auf den Taster ausgeübt, die ihn wieder in die Richtung seiner ursprünglichen Position zurückdrängt.

Neben dieser achsparallelen Ausrichtung kann in einer abgewandelten Ausführungsform beispielsweise auch ein hierzu im Winkel ausgerichtetes Antriebselement vorgesehen sein, beispielsweise radial abstehend vom Schalthebel.

Um die Positionsveränderung des Schalthebels angesteuert auszulösen, wird erfindungsgemäß weiterhin ein Halteelement zum Halten einer Schalthebelposition gegen die Kraft des Antriebselementes zur Positionsveränderung des Schalthebels vorgesehen. Dadurch ist beispielsweise der Zeitpunkt, in dem die Rückstellbewegung einsetzt, ansteuerbar. Bei Auslenkung des Schalthebels bleibt dieser zunächst in der ausgelenkten Position, und erst wenn sowohl die Hand des Bedieners losgelassen hat als auch das Halteelement angesteuert die Halterung löst, stellt sich der Schalthebel zurück. Das ermöglicht ein gewisses Zeitintervall, in dem der Schalthebel in der ausgelenkten Position verbleibt. Damit kann beispielsweise für dieses Zeitintervall ein stabiler Schaltzustand gewährleistet werden.

Weiterhin ist das Halteelement zum Halten der Schalthebelposition gegen die Kraft des Antriebselementes zur Positionsveränderung des Schalthebels elektrisch ansteuerbar ausgebildet.

Im Weiteren wird vorgeschlagen, dass zum Lösen des Halteelementes das gleiche Antriebselement verwendet wird, das zur Betätigung des Begrenzungselementes vorgesehen ist. Durch die Verwendung desselben Antriebselementes kann einerseits eine Kosteneinsparung erreicht werden und andererseits auch eine zusätzliche Funktionsgenerierung bei unveränderter Bauteileanzahl und unverändertem Komponentenvolumen. Insbesondere vorteilhaft ist daher vorgesehen, dass das Halteelement mittels des elektrischen Antriebselementes zur Begrenzung des Betätigungswegs des Schalthebels lösbar ist. Um die Verrastung des Schalthebels in der ausgelenkten Position und/oder die Gegenkraft für den Bediener beim Auslenken und/oder eine spürbare Verrastung des Schalthebels definiert ausbilden zu können, wird in einer Weiterbildung das Halteelement so ausgebildet, dass ein auf einer Kulisse anliegender Raststößel vorgesehen ist. Die Kulisse definiert dann die Haptik, die die Bedienperson beim Auslenken des Schaltelementes spürt. Sie kann auch einen Rastpunkt in Form eines Nockens, einer Erhebung oder einer Senke definieren, usw. Beispielsweise kann die Kulisse eine wellenartige Kontur aufweisen, entlang derer der Raststößel entlangfährt, wenn der Schalthebel in seiner Position verändert wird. Ein Wellenkamm dieser Struktur, oder auch mehrere, kann bzw. können hierbei einen oder mehrere erhöhte Widerstandswerte entlang der Bewegungsbahn des Schalthebels ausbilden, die sowohl für die Bedienperson als Rückmeldung für eine bestimmte Schalthebelposition dienen können als auch ein Haltemittel für den Raststößel.

Dieser Raststößel kann wie der Stößel des Antriebselementes zur Positionsveränderung gleiten oder abrollen, je nachdem wie er ausgebildet ist. Der Raststößel wird dabei vorteilhafterweise federbeaufschlagt an die Kulisse gedrückt, sodass durch die Federkraft die vom Bediener spürbare Gegenkraft aufgebaut wird und gleichzeitig beim Erreichen der Rastposition die Verrastung erfolgen kann. Zur Realisierung können der Raststößel und/oder die Kulisse federbeaufschlagt sein.

Um die Rastposition zu lösen, wird vorteilhafterweise entweder der Raststößel und/oder die Kulisse beweglich ausgestaltet, bevorzugt auch antreibbar. Dadurch kann für verschiedene Betriebssituationen und/oder -zustände eine Positionsveränderung ermöglicht werden. Beispielsweise durch Ansteuerung, sodass der Schalthebel gemäß eines vorgesehenen Betriebszustandes oder einer Betriebssituation freigegeben wird. Es ist aber auch möglich, dass die Bedienperson die Position des Hebels verändert, indem sie den entsprechenden Rastwiderstand überwindet. Beispielsweise kann hierbei eine zuvor getroffene Positionsauswahl revidiert werden.

Um die Lösung des Halteelementes mittels des elektrischen Antriebselements zur Begrenzung des Betätigungsweges des Schalthebels zu ermöglichen, wird eben diese Beweglichkeit des Raststößels und/oder der Kulisse so vorgenommen, dass das eine und/oder andere dieser Elemente durch dieses Antriebselement antreibbar ist/sind. Zu diesem Zweck kann das Halteelement einen Schwenkhebel umfassen, der mittels eines Nockens an einer Welle des elektrischen Antriebselements bewegbar ist.

Nochmals Bezug nehmend auf das von dem elektrischen Antriebselement zur Begrenzung eines Betätigungsweges des Schalthebels angetriebenen Begrenzungselementes wird für eine Ausführungsform vorgeschlagen, dass dieses Begrenzungselement beispielsweise in der Form eines Exzenters ausgebildet ist, wobei der Exzenter mittels der Welle des elektrischen Antriebselements verschwenkbar sein kann. Andere mögliche Ausführungsmöglichkeiten wären beispielsweise Hebel, Stift oder andere in den Betätigungsweg eines Schalthebels bringbare Begrenzungselemente.

In weiter vorteilhafter Weise kann in einer weiteren Ausführungsform auch sichergestellt werden, dass die Betätigung des Begrenzungselementes bei Auslenkung des Schalthebels in einer oder mehreren vorgegebenen Positionen und/oder in einem oder mehreren bestimmten Positionsbereichen blockiert ist. Diese Blockierung kann mechanisch und/oder auch elektronisch vorgesehen sein, beispielsweise indem eine mechanische Verriegelung des Begrenzungselementes beim Rückstellen des Schalthebels gelöst wird oder indem ein Positionssensor im einfachsten Fall ein Taster als elektrisches Schaltelement vorgesehen wird, der die elektrische Ansteuerung des Antriebselementes erst in einer bestimmten Position oder in bestimmten mehreren Positionen des Schalthebels freigibt.

Damit kann sichergestellt werden, dass das Begrenzungselement, z. B. der Exzenter, der zur Verriegelung des Schalthebels dient, nicht auf den Schalthebel einwirken kann, solange der ausgelenkt ist.

Ein Ausführungsbeispiel der Erfindung wird nachfolgend anhand der in den Zeichnungen dargestellten Figuren näher erläutert.

Im Einzelnen zeigen:
- Figuren 1a und 1b: eine elektrische Schalteinrichtung für ein Kraftfahrzeug, wobei Figur 1a ein Gehäuse zur Aufnahme einer Schaltwelle und zugehörige Komponenten zeigt, und Figur 1b eine schematische Schnittdarstellung durch das in Figur 1a dargestellte Gehäuse mit eingesetzter Schaltwelle, ebenfalls mit zusätzlichen, erfindungsgemäßen Komponenten.
- Figuren 2a bis 6b: die gleichen Komponenten, wie in den Figuren 1a und 1b, jedoch in jeweils verschiedenen Betriebszuständen.

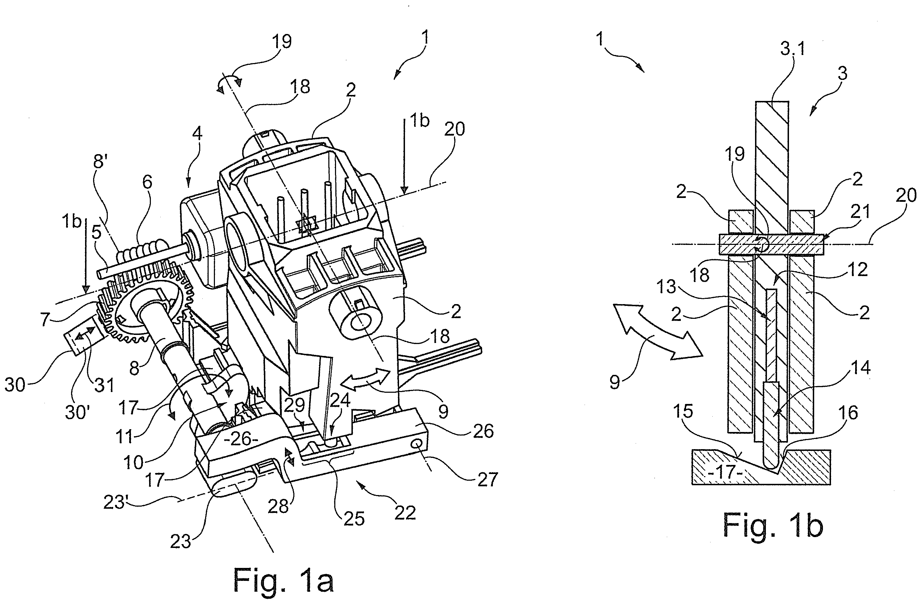

Die Figur 1a zeigt eine elektrische Schalteinrichtung 1 für ein Kraftfahrzeug mit einem Gehäuse 2 zur Aufnahme eines Hebels 3.1 eines aus Gehäuse 2 und Hebel 3.1 bestehenden Schalthebels 3 gemäß der schematischen Schnittdarstellung in der Figur 1b entlang der Achse 20 in der Figur 1a. Die elektrische Schalteinrichtung 1 umfasst ein elektrisches Antriebselement 4 mit Antriebswelle 5 und schematisch daran dargestelltem Drehmomentübertragungsmittel, hier beispielhaft in der Form eines Schneckenrades 6. Dieses Schneckenrad 6 kämmt mit einem an einer Welle 8 angeordneten Zahnrad 7.

Das elektrische Antriebselement 4 dient zur Begrenzung eines Betätigungsweges des Schalthebels 3, entsprechend der beiden Doppelpfeile 9 in den Figuren 1a und 1b, mittels eines vom elektrischen Antriebselement 4 angetriebenen Begrenzungselementes 10. Die Begrenzung des Betätigungsweges 9 des Schalthebels 3 erfolgt durch Anlage des Begrenzungselementes 10 am Gehäuse 2 der elektrischen Schalteinrichtung 1.

In der hier dargestellten Ausführung ist das Begrenzungselement 10 als um die Achse der Welle 8 mit dieser schwenkbarer Exzenter ausgebildet. Je nach Drehwinkel der von dem elektrischen Antriebselement 4 angetriebenen Welle 8 kann das Begrenzungselement 10 zur Blockade, des Betätigungsweges des Schalthebels 3 gemäß der durch den Doppelpfeil 11 dargestellten Drehbewegung der Achse 8, in dessen Betätigungsweg 9 eingeschwenkt oder zu dessen Freigabe wieder aus diesem herausgeschwenkt werden.

Für den Schalthebel 3 ist eine angetriebene Positionsveränderung vorgesehen. Diese wird durch ein vom elektrischen Antriebselement 4 verschiedenes Antriebselement 12 bewirkt. In der hier gemäß Figur 1b dargestellten Ausführungsform handelt es sich dabei um ein vom elektrischen Antriebselement 4 vollkommen separat ausgebildetes Antriebselement 12. Dieses umfasst ein mechanisches Rückstellelement 13, beispielsweise in der Form einer Feder. Diese Feder drückt einen Stößel 14 gegen eine geneigte Fläche 15, sodass der Stößel 14 kraftbeaufschlagt an der schrägen Fläche 15 anliegt. Ein am unteren Ende der geneigten Fläche 15 am betreffenden Auflageelement 17 aufsteigend ausgebildeter Materialabschnitt bildet ein Gegenlager 16 aus, sodass in der hierdurch entstehenden Kerbe 15, 16 für die Spitze des Stößels eine 14 Ruheposition ausgebildet ist.

Zum Verschwenken kann der Schalthebel 3 um eine Achse 18 gedreht werden. Diese Drehung des Schalthebels 3 gemäß den Pfeilrichtungen des Doppelpfeils 19 bewirkt ein Verkippen des Gehäuses 2 entlang der Achse 20 eines die *Schaltwelle* 3.1 im Gehäuse 2 fixierenden Lagerstiftes 21.

Um den Schalthebel 3 gegen die Kraft des Antriebselementes 12 in einer Schaltposition halten zu können, ist im Weiteren ein Halteelement 22 vorgesehen. Dies ist im gezeigten Ausführungsbeispiel an der Außenseite des Gehäuses 2 realisiert. In kostensparender Weise kann dieses Halteelement 22 mittels des gleichen elektrischen Antriebselementes 4 angesteuert werden wie das Begrenzungselement 10. Auch das Halteelement 22 kann dadurch, je nach Drehlage der Welle 8, elektrisch angesteuert aktiviert bzw. deaktiviert werden, vorzugsweise unabhängig vom Funktionszustand des Begrenzungselementes 10. Insbesondere kann für beide Schaltzustände "aktiviert/deaktiviert" des Antriebselementes 12 sichergestellt werden, dass das Begrenzungselement 10 nicht in den Schaltweg 9 eingreifen kann. Weder passiv begrenzend, noch aktiv schaltend. Möglich ist dies zum Beispiel durch entsprechende Wahl des Drehwinkels und der Drehrichtung der Welle. Zur Absicherung kann ein elektrisch und/oder mechanisch betätigbares Blockiermittel 30 vorgesehen sein, das nachfolgend noch näher beschrieben ist.

Als Steuerelement für das Halteelement 22 ist ein mit der Welle 8 verbundener Nocken 23 vorgesehen, der je nach Drehlage das Halteelement 22 in Haltestellung bringt, bzw. wieder freigibt. Im vorliegenden Ausführungsbeispiel weist der Nocken 23 etwa einen ovalförmigen Querschnitt mit flachen Längsseiten auf, sodass jeweils um 180° gegenüberliegend die gleichen Schaltzustände für das Halteelement 22 angesteuert werden können. In der entsprechend flach ausgerichteten Zuordnung, wie in der Figur 1a dargestellt, ist das Halteelement 22 gelöst bzw. freigegeben. Bei einer Drehung um die Achse der Welle 8 um 90° ist das Halteelement 22 dem gegenüber fixiert. Zwischen diesen beiden Zuständen bewegt er einen Schwenkhebel 26 gemäß den beiden Richtungen des Doppelpfeils 28 von einer Endlage in die andere.

Das Halteelement 22 umfasst einen Raststößel 24, der hier beispielhaft an einer Seite des Gehäuses 2 zu dem Schwenkhebel 26 hin ausgerichtet angeordnet ist und im Eingriff mit einer Kulisse 25 steht. Diese Kulisse 25 weist eine im Querschnitt betrachtet wellenartige Kontur auf. Ihre Kämme stellen im aktivierten Zustand des Halteelementes 22 beim Verkippen des Schalthebels einen erhöhten Widerstand für den Raststößel 24 dar. Die Wellentäler bilden demgegenüber entsprechende Rastpositionen für den Raststößel 24 und damit für den Schalthebel 3 aus. In der dargestellten Ausführungsform ist die Kulisse 25 an den um eine Schwenkachse 27 drehbaren Schwenkhebel 26 vorgesehen. In einer alternativen Ausführungsform können beispielsweise auch der Raststößel 24 und die Kulisse 25 positionsmäßig vertauscht sein. In einer bevorzugten Ausführungsform ist zumindest einer der beiden federbeaufschlagt ausgebildet. Damit kann auch im verrasteten Zustand beispielsweise manuell eine Positionsänderung des Schalthebels 3 ermöglicht und/oder dem Bedienenden entsprechend des positionsabhängigen Schwenkwiderstandes für den Schalthebel eine Positionsrückmeldung vermittelt werden.

Es bietet sich an, dass zur Vermeidung eines nicht vorgesehenen Einbringens des Begrenzungselementes 10 in den Betätigungsweg 9 des Schalthebels 3 eine Blockierung für das Begrenzungselement 10 vorgesehen ist. Diese kann beispielsweise mechanisch und/oder elektrisch realisiert sein. Rein beispielhaft und schematisch ist hierfür ein Blockiermittel 30 dargestellt, das gemäß der beiden Pfeilrichtungen des Doppelpfeils 31 eine Antriebsbewegung für die Achse 8 blockieren (gestrichelte Darstellung 30') bzw. freigeben (durchgezogene Liniendarstellung 30) kann.

Wichtig zum Verständnis der Darstellung ist, dass die Figur 1b eine Schnittdarstellung entlang der Achse 20 in der Figur 1a zeigt, mit zusätzlich im Gehäuse 2 angeordneter *Schaltwelle* 3.1. In der Figur 1b ist in der unteren Hälfte der Darstellung das vom elektrischen Antriebselement 4 des Begrenzungselementes 10 erfindungsgemäß verschiedene Antriebselement 12 gezeigt.

Zum besseren Verständnis wird nachfolgend ein Überblick über die jeweiligen Schaltzustände- bzw. Positionen des Schalthebels 3 der elektrischen Schalteinrichtung 1 und anschließend die Zusammenwirkung der Komponenten für diese beispielhaft dargestellte Ausführungsform unter Bezugnahme auf die weiteren Figuren folgendermaßen erläutert.

In der Figur 1a blockiert das Begrenzungselement 10 den Schaltweg des Schalthebels 3. Dies geschieht durch Anliegen des mit der Welle 8 um deren Achse 8' drehbaren Exzenters 10. In der Darstellung in Figur 1a liegt dieser am Gehäuse 2 des Schalthebels 3 so an, dass er dessen Betätigungsweg 9 blockiert. In der schematischen Darstellung der Figur 1b ist in dieser Schwenkposition des Schalthebels 3 das vom elektrischen Antriebselement 4 verschiedene Antriebselement 12 in einer nicht mit einer Rückstellkraft beaufschlagten Position.

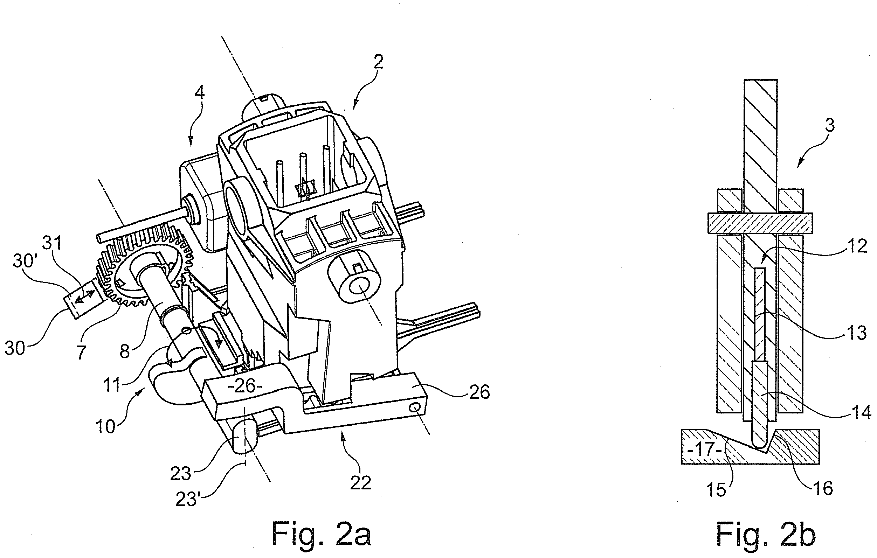

In der Figur 2b sind Schalthebel 3 und das vom elektrischen Antriebselement 4 verschiedene Antriebselement 12 in der gleichen, nicht ausgelenkten Position in der Darstellung in der Figur 1b. Gleiches gilt für die Darstellung in der Figur 2a für das Gehäuse 2 des Schalthebels 3. Verschieden gegenüber der Darstellung in der Figur 1a ist demgegenüber der Drehwinkel der Welle 8 und damit die Schwenkposition des Begrenzungselementes 10 und des Nockens 23. Die durch die Nocke 23 verlaufende Längsachse ist in dieser Darstellung horizontal ausgerichtet. Die Welle 8 ist, in Draufsicht im Uhrzeigersinn um 90° gegenüber der Darstellung in der Figur 1a gedreht. Hierdurch ist der das Begrenzungselement 10 ausbildende Exzenter, in der Draufsicht der Darstellung der Figur 2a, im in dem vom Gehäuse 2 wegweisenden, unteren Quadranten angeordnet. In dieser Winkelstellung der Achse 8 ist sichergestellt, dass er nicht in den Betätigungsweg 9 des Schalthebels 3 eingreifen kann. Wiederum schematisch und beispielhaft ist im Weiteren das Blockierelement 30 dargestellt, welches gemäß der beiden Pfeilrichtungen des Doppelpfeils 31 hier beispielhaft in die Verzahnung des Zahnrades 7 die Drehbewegung der Welle 8 blockierend eingreifen kann.

Das zweite, von der Drehposition der Welle 8 in kosten- und platzsparender Weise ansteuerbare Element, der Schwenkhebel 26, ist durch die ebenfalls erfolgte 90°-Drehung der Nocke 23 nach oben geschwenkt, in aktivierter Position. Die durch die Nocke 23 verlaufende Längsachse 23' ist in dieser Darstellung vertikal ausgerichtet.

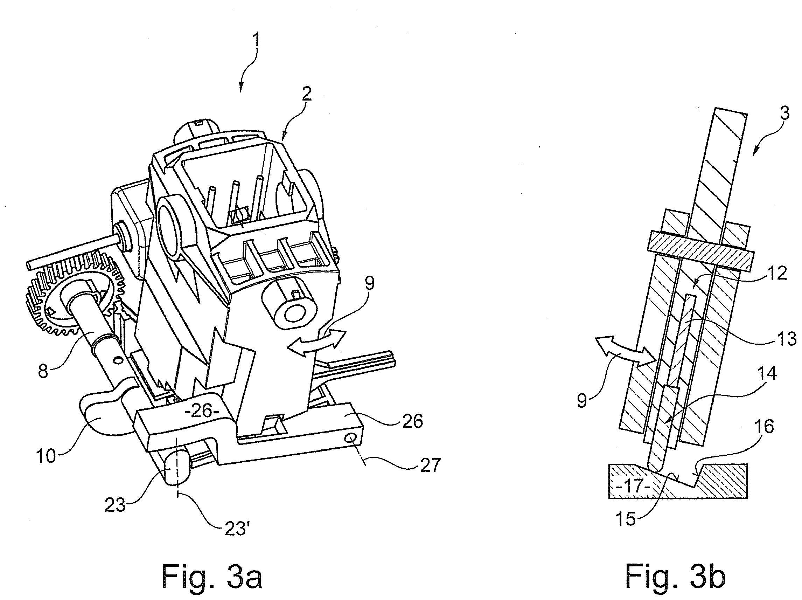

In der Darstellung in der Figur 3a entspricht die Drehwinkelstellung der Welle 8 der in der Figur 2a Dargestellten. Demgemäß sind auch das Begrenzungselement 10 und der Nocken 23 in derselben Drehwinkelausrichtung gezeigt. Im Unterschied hierzu ist jedoch das Gehäuse 2 des Schalthebels 3 in ausgeschwenkter Darstellung gezeigt, was auch durch die Verschwenkung gegenüber den beiden Doppelpfeilen 9 zur Symbolisierung des Betätigungsweges visualisiert ist. Das Antriebselement 12 befindet sich hierbei in aktiviertem Zustand. Im Rückstellelement 13, in der Form einer Feder, ist aufgrund deren Komprimierung Rückstellenergie für den Schalthebel 3 gespeichert. Die Komprimierung rührt von der Bewegung des Stößels 14 entlang der geneigten Fläche 15 durch Verkippen des Schalthebels 3 um die Achse 18 her.

Ohne Gegenmaßnahmen würde in dieser Position der Schalthebel 3 aufgrund der Rückstellkraft des Rückstellelementes 13 wieder in die Position der Figuren 1a, 2a bzw. 1b und 2b zurückgedrängt. Aufgrund der vertikalen Ausrichtung des Nockens 23 befindet sich jedoch das Halteelement 22 in aktiviertem Zustand. Sein Hebel 26 ist um die Achse 27 nach oben geschwenkt, sodass der Raststößel 24 in einer Senke der ihm zugeordneten, komplementären Kulisse 25 fixiert ist und damit den Schalthebel 3 in dieser Position fixiert. Ein Ausrücken aus dieser Schaltposition kann entweder durch manuelles Überfahren des Rückstellwiderstandes zwischen Raststößel 24 und Kulisse 25 bewirkt werden oder durch Deaktivierung des Halteelementes 22 entsprechend einer Verschwenkung des Nockens 23, wie beispielsweise in der Figur 1a dargestellt.

Der Stößel 14 des Antriebselements 12 kann hierbei gleitend an der geneigten Fläche 15 geführt sein. Alternativ sind auch andere Führungen möglich, wie zum Beispiel eine Rollführung, beispielsweise mittels einer Rolle oder einer Kugel.

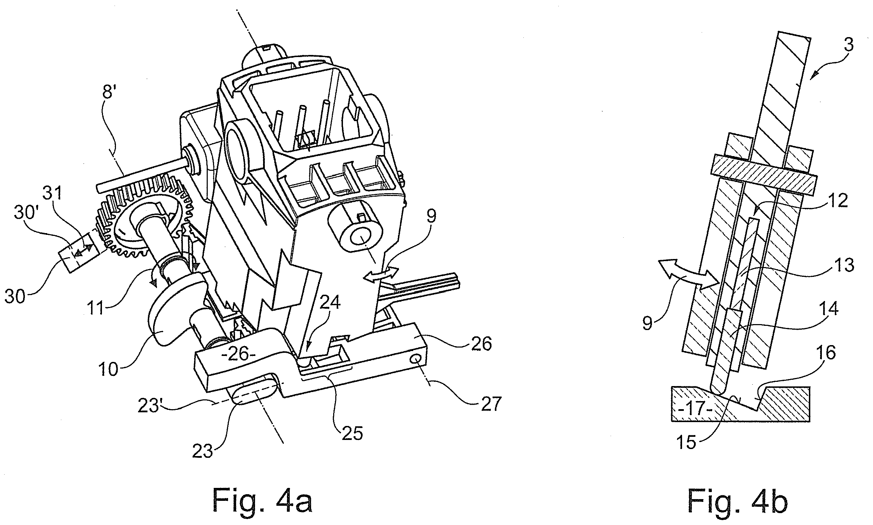

Die beiden Darstellungen der Figuren 4a und 4b unterscheiden sich von denen der Figuren 3a und 3b dadurch, dass die Welle 8 um weitere 90° in Draufsicht in Uhrzeigerrichtung gedreht dargestellt ist. Die durch die Nocke 23 verlaufende Längsachse 23' ist wiederum in horizontaler Ausrichtung dargestellt. Das Begrenzungselement 10 ist aufgrund der festen Winkelzuordnung in den vom Gehäuse 2 abgewandten oberen Quadranten positioniert und kann wiederum nicht in den Betätigungsweg 9 des Schalthebels 3 eingreifen.

Der Schwenkhebel 26 wird durch die horizontale Lage des Nockens 23 in die Lage versetzt, in seine untere, getriebefernere Position um seine Achse 27 zu verschwenken. In dieser Position des Schwenkhebels 26 steht der Raststößel 24 außer Eingriff mit der Kulisse 25. Zumindest soweit dass die Rückstellkraft des Rückstellelementes 13 größer ist, als eine gegebenenfalls noch vorhandene Haltekraft zwischen dem Raststößel 24 und der vorzugsweise eine wellenförmige Oberfläche aufweisenden Kulisse 25. Damit kann der Schalthebel 3 in seine so genannte "Ruheposition", wie in den Figuren 1a und 1b dargestellt, zurückschwenken.

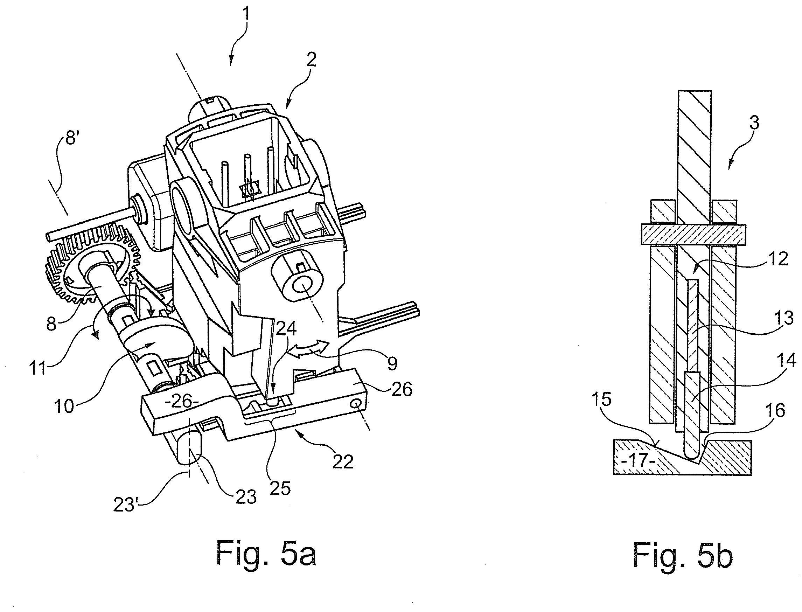

Die Figuren 5a und 5b zeigen den Schalthebel 3 und das Gehäuse 2 in der so genannten "Ruheposition". Der Raststößel 24 liegt in einer Vertiefung der wellenartigen Oberfläche der Kulisse 25. Die Welle 8 ist im Vergleich zur Darstellung in der Figur 4a um weitere 90° in der Zeichenebene im Uhrzeigersinn weiter gedreht. Die Nocke 23 steht aufrecht, sodass die durch sie verlaufende Längsachse 23' vertikal ausgerichtet ist. Der Schwenkhebel 26 befindet sich im angehobenen Zustand und damit das Halteelement 22 im aktiven Zustand. Ein Verschwenken des Gehäuses 2 des Schalthebels 3 in eine Position gemäß der Darstellungen der Figur 4a wäre grundsätzlich durch manuelle Überwindung des zwischen Raststößel 24 und Kulisse 25 wirkenden Rastwiderstandes möglich. Da jedoch das Begrenzungselement 10 in der Form des an der Welle 8 angeordneten Exzenters 10 sich in dem dem Gehäuse 2 zugewandten, oberen Quadranten befindet, sperrt es zumindest teilweise den Betätigungsweg 9 des Schalthebels 3, sodass dieser in seiner Bewegungsfreiheit zumindest begrenzt ist.

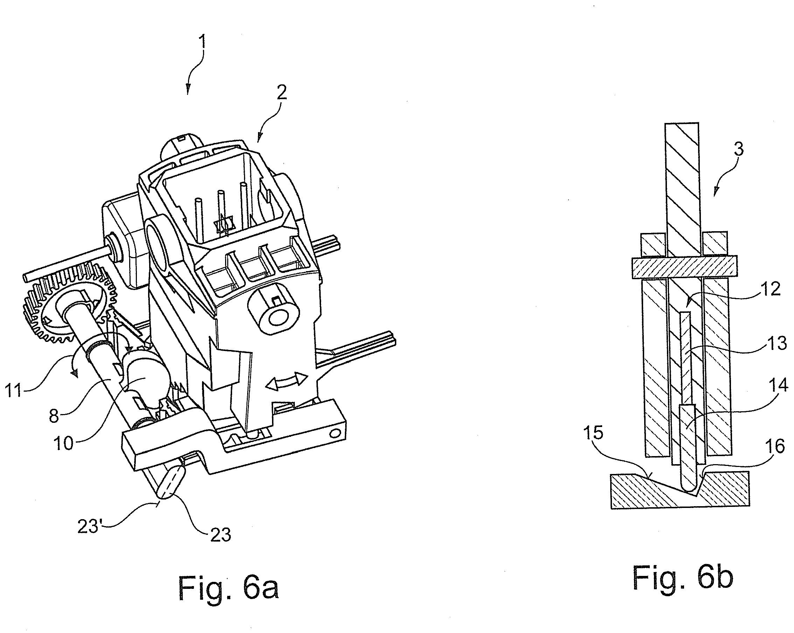

In der Darstellung der Figur 6a ist die Welle 8 um weitere 45° gegenüber der Darstellung in der Figur 5a in der Zeichenebene im Uhrzeigersinn weiter gedreht und blockiert den Betätigungsweg 9 des Schalthebels 3 vollständig. Die elektrische Schalteinrichtung 1 ist in diesem Zustand nicht schaltbar blockiert. Um sie zu lösen, muss die Welle 8 wieder in eine Position gedreht werden, in der das Begrenzungselement 10 zumindest teilweise wieder den Betätigungsweg 9 für den Schalthebel 3 freigibt.

Nachfolgend wird nun der weitere Aufbau des Schalthebels 3 folgendermaßen beschrieben. Im Inneren der Schaltwelle 3.1 des Schalthebels 3 befindet sich eine Druckfeder 13, die einen Rückstelltaster 14 gegen eine Auflaufschräge 15 drückt. Dadurch wird die Rückstellung des Schalthebels 3 bewirkt. Die Rückstellung des Schalthebels 3 erfolgt somit durch diese Druckfeder 13 in Verbindung mit der Auflaufschräge 15 und dem darauf gleitenden Rückstelltaster 14. Sie erfolgt demnach grundsätzlich immer dann, wenn der Schalthebel 3 in der betätigten Stellung losgelassen wird.

Um dies in bestimmten Situationen zu verhindern, ist zusätzlich ein weiterer druckfederbeaufschlagter Raststößel oder Rasttaster 24 außen am Gehäuse 2 vorgesehen, der in einer Gleitkulisse 25 des Schwenkhebels 26 geführt ist. Dieser Schwenkhebel 26 wird durch das dem Antrieb 4 gegenüberliegende Ende der Antriebswelle 8 mittels des Nockens 23 dieser Welle betätigt. Der Schwenkhebel 26 wird nach oben bewegt, wenn der Nocken 23 nach oben gedreht wird. Dies entspricht einer Ausdehnungsänderung quer zur Betätigungsrichtung des Schalthebels 3. Dabei ist der Exzenter 10 vom Schalthebel 3 weggerichtet, also außerhalb eines Betätigungsweges 9 des Schalthebels 3. In dieser angehobenen Position des Schwenkhebels 26 (Figur 2a) wird der Raststößel 24 vorgespannt und kann beim Überwinden einer Rastnase 29 in der Gleitkulisse 25 aufgrund der Betätigung des Schalthebels 3 diesen in der gedrehten Stellung gegen die rückstellende Kraft des Rückstellelementes 13 des Rückstelltasters bzw. Antriebselementes 12 halten.

Wird die Exzenterwelle 8 weiter gedreht, so gibt der endseitige Nocken 23 den Schwenkhebel 26 mit Kulisse 25 frei, sodass dieser sich absenkt und die Verrastung gelöst wird. In diesem Moment erfolgt die Rückstellung durch das Antriebselement 12 aufgrund der Rückstellschräge 15, auf der der Stößel 14 gleitet. Der Exzenter 10 der Exzenterwelle 8 befindet sich dabei immer noch außerhalb des Betätigungsweges 9 des Schalthebels 3.

In dieser Position wird der Schalthebel 3 also zurückgestellt (Figur 4a und 4b), ist jedoch nicht verriegelt. Durch Weiterdrehen der Exzenterwelle 8 kann nunmehr der Exzenter 10 in den Betätigungsweg 9 des Schalthebels 3 eingebracht (Figur 5a und 5b) und dieser somit verriegelt werden (Figur 5a, 6a und 1a).

In dem beschriebenen funktionsgemäßen Normalbetrieb liegt somit eine elektrische Schalteinrichtung 1 für ein Kraftfahrzeug vor, bei der der Aktuator 4, das heißt der Schneckenantrieb 4, 5, 6, 7, 8 durch das Einbringen und damit durch Veränderung der Ausdehnung des Exzenters 10 als Begrenzungselement innerhalb eines Betätigungsweges 9 des Schalthebels 3 dessen Position nicht verändern kann.

### Bezugszeichenliste:

- 1: elektrische Schalteinrichtung
- 2: Gehäuse
- 3: Schalthebel
- 3.1: Schaltwelle
- 4: elektrisches Antriebselement
- 5: Antriebswelle
- 6: Schneckenrad
- 7: Zahnrad
- 8: Welle
- 9: Teil/Betätigungsweg
- 10: Begrenzungselement
- 11: Pfeil
- 12: Antriebselement
- 13: Rückstellelement
- 14: Stößel
- 15: geneigte Fläche
- 16: Gegenlager
- 17: Auflagerelement
- 18: Achse
- 19: Pfeil
- 20: Achse
- 21: Lagerstift
- 22: Haltelement
- 23: Nocken
- 24: Raststößel
- 25: Kulisse
- 26: Schwenkhebel
- 27: Schwenkachse
- 28: Pfeil
- 29: Rastnase
- 30: Blockierelement
- 31: Pfeil

## Patentansprüche

1. Schalteinrichtung (1) für ein Kraftfahrzeug mit einem Schalthebel (3) und einem elektrischen Antriebselement (4) zur Begrenzung eines Betätigungswegs (9) des Schalthebels (3) mittels eines vom Antriebselement (4) angetriebenen Begrenzungselementes (10), wobei eine angetriebene Positionsveränderung des Schalthebels (3) vorgesehen ist, wobei zur angetriebenen Positionsveränderung des Schalthebels (3) ein vom elektrischen Antriebselement (4) des Begrenzungselementes (10) verschiedenes Antriebselement (12) vorgesehen ist, **dadurch gekennzeichnet, dass** ein Halteelement (22) zum Halten einer Schalthebelposition gegen die Kraft des Antriebselementes (12) zur Positionsveränderung des Schalthebels (3) vorgesehen ist und dass das Halteelement (22) zum Halten der Schalthebelposition gegen die Kraft des Antriebselementes (12) zur Positionsveränderung des Schalthebels (3) elektrisch angesteuert lösbar ist.

2. Schalteinrichtung nach Anspruch 1, **dadurch gekennzeichnet, dass** das Antriebselement (12) zur Positionsveränderung des Schalthebels (3) ein mechanisches Rückstellelement (13), insbesondere eine Feder umfasst.

3. Schalteinrichtung nach einem der vorgenannten Ansprüche, **dadurch gekennzeichnet, dass** ein vom Antriebselement (12) zur Positionsveränderung des Schalthebels (3) kraftbeaufschlagter, auf einer geneigten Fläche (15) anliegender Stößel (14) vorgesehen ist.

4. Schalteinrichtung nach einem der vorgenannten Ansprüche, **dadurch gekennzeichnet, dass** das Halteelement (22) mittels des elektrischen Antriebselementes (4) zur Betätigung des Begrenzungselementes (10) des Betätigungswegs (9) des Schalthebels (3) lösbar ist.

5. Schalteinrichtung nach einem der vorgenannten Ansprüche, **dadurch gekennzeichnet, dass** das Halteelement (22) einen an einer Kulisse (25) anliegenden Raststößel (24) umfasst.

6. Schalteinrichtung nach Anspruch 5, **dadurch gekennzeichnet, dass** der Raststößel (24) und/oder die Kulisse (25) federbeaufschlagt sind.

7. Schalteinrichtung nach einem der vorgenannten Ansprüche 5 oder 6, **dadurch gekennzeichnet, dass** der Raststößel (24) und/oder die Kulisse (25) zur Lösung der Rastposition beweglich ausgebildet ist.

8. Schalteinrichtung nach einem der vorgenannten Ansprüche 5 bis 7, **dadurch gekennzeichnet, dass** der Raststößel (24) und/oder die Kulisse (25) durch das elektrische Antriebselement (4) des Begrenzungselementes (10) zur Begrenzung des Betätigungsweges (9) des Schalthebels (3) antreibbar ist.

9. Schalteinrichtung nach einem der vorgenannten Ansprüche, **dadurch gekennzeichnet, dass** das Halteelement (22) einen Schwenkhebel (26) umfasst.

10. Schalteinrichtung nach einem der vorgenannten Ansprüche, **dadurch gekennzeichnet, dass** die Betätigung des Begrenzungselementes (10) bei Auslenkung des Schalthebels (3) in einer bestimmten Position oder mehreren bestimmten Positionen und/oder in einem bestimmten Positionsbereich oder mehreren bestimmten Positionsbereichen blockiert ist.

11. Schalteinrichtung nach Anspruch 9, **dadurch gekennzeichnet, dass** der Schwenkhebel (26) mittels eines Nockens (23) zwischen einem das Halteelement (22) freigebenden Zustand sowie einem das Halteelement (22) fixierenden Zustand bewegbar ist.

12. Schalteinrichtung nach Anspruch 11, **dadurch gekennzeichnet, dass** das Antriebselement (4) eine Welle (8) umfasst, und dass der Nocken (23) an der Welle (8) angeordnet ist.

13. Schalteinrichtung nach Anspruch 12, **dadurch gekennzeichnet, dass** das Begrenzungselement (10) als ein mit der Welle (8) schwenkbarer Exzenter ausgebildet ist.

## Claims

1. A switching device (1) for a motor vehicle with a gear lever (3) and an electrical drive element (4) for limiting an actuation path (9) of the gear lever (3) by means of a limiting element (10) driven by the drive element (4), wherein a driven position change of the gear lever (3) is provided, wherein, for the driven position change of the gear lever (3), a drive element is provided that is different from the electrical drive element (4) of the limiting element (10), **characterised in that** a retaining element (22) is provided for retaining a gear lever position against the force of the drive element (12) for the position change of the gear lever (3), and **in that** the retaining element (22) for retaining the gear lever position against the force of the drive element (12) for the position change of the gear lever (3) is electrically releasable when actuated.

2. The switching device according to Claim 1, **characterised in that** the drive element (12) for the position change of the gear lever (3) comprises a mechanical return element (13), in particular a spring.

3. The switching device according to any one of the preceding claim, **characterised in that** a tappet (14) force-actuated by the drive element (12) for the position change of the gear lever (3) and in contact with an inclined surface (15) is provided.

4. The switching device according to any one of the preceding claims, **characterised in that** the retaining element (22) is releasable by means of the electric drive element (4) for actuating the limiting element (10) of the actuation path (9) of the gear lever (3).

5. The switching device according to any one of the preceding claims, **characterised in that** the retaining element (22) comprises a locking tappet (24) in contact with a slide (25).

6. The switching device according to Claim 5, **characterised in that** the locking tappet (24) and/or the slide (25) are spring loaded.

7. The switching device according to any one of the preceding claims 5 or 6, **characterised in that** the locking tappet (24) and/or the slide (25) is designed for movably loosening the locking position.

8. The switching device according to any one of the preceding claims 5 to 7, **characterised in that** the locking tappet (24) and/or the slide (25) can be driven by the electrical drive element (4) of the limiting element (10) for limiting the actuation path (9) of the gear lever (3).

9. The switching position according to any one of the preceding claims, **characterised in that** the retaining element (22) comprises a swivelling lever (26).

10. The switching device according to any one of the preceding claims, **characterised in that** the actuation of the limiting element (10), when the gear lever (3) is moved, is locked in a certain position or in a plurality of certain positions and/or in a certain position range or in a plurality of certain position ranges.

11. The switching device according to Claim 9, **characterised in that** the swivelling lever (26) is movable by means of a cam (23) between a condition releasing the retaining element (22) and a condition fixing the retaining element (22).

12. The switching element according to Claim 11, **characterised in that** the drive element (4) comprises a shaft (8), and **in that** the cam (23) is arranged on the shaft (8).

13. The switching device according to Claim 12, **characterised in that** the limiting element (10) is designed as an eccentric that can be swivelled with the shaft (8).

## Revendications

1. Dispositif de commande (1) de véhicule automobile doté d'un levier de changement de vitesse (3) et d'un élément d'entraînement électrique (4) pour limiter une course d'actionnement (9) du levier de changement de vitesse (3) au moyen d'un élément de limitation (10) entraîné par l'élément d'entraînement (4), un changement de position entraîné du levier de changement de vitesse (3) étant prévu et un élément d'entraînement (12) différent de l'élément d'entraînement électrique (4) de l'élément de limitation (10) étant prévu pour le changement de position entraîné du levier de changement de vitesse (3), **caractérisé en ce qu'**il est prévu un élément de retenue (22) pour maintenir une position du levier de changement de vitesse contre la force de l'élément d'entraînement (12) pour le changement de position du levier de changement de vitesse (3) et **en ce qu'**il est possible de débloquer par commande électrique l'élément de retenue (22) pour maintenir la position du levier de changement de vitesse contre la force de l'élément d'entraînement (12) pour le changement de position du levier de changement de vitesse (3).

2. Dispositif de commande selon la revendication 1, **caractérisé en ce que** l'élément d'entraînement (12) pour le changement de position du levier de changement de vitesse (3) comprend un élément de rappel mécanique (13), en particulier un ressort.

3. Dispositif de commande selon l'une des revendications précédentes, **caractérisé en ce qu'**il est prévu un poussoir (14) ajusté sur une surface inclinée (15) et soumis à une force par l'élément d'entraînement (12) pour le changement de position du levier de changement de vitesse (3).

4. Dispositif de commande selon l'une des revendications précédentes, **caractérisé en ce que** l'élément de retenue (22) peut être débloqué au moyen de l'élément d'entraînement électrique (4) pour actionner l'élément de limitation (10) de la course d'actionnement (9) du levier de changement de vitesse (3).

5. Dispositif de commande selon l'une des revendications précédentes, **caractérisé en ce que** l'élément de retenue (22) comprend un poussoir à enclenchement (24) ajusté sur une coulisse (25).

6. Dispositif de commande selon la revendication 5, **caractérisé en ce que** le poussoir à enclenchement (24) et/ou la coulisse (25) sont sollicités par un ressort.

7. Dispositif de commande selon l'une des revendications 5 ou 6 précédentes, **caractérisé en ce que** le poussoir à enclenchement (24) et/ou la coulisse (25) sont conçus de manière mobile pour libérer la position d'enclenchement.

8. Dispositif de commande selon l'une des revendications 5 à 7 précédentes, **caractérisé en ce que** le poussoir d'enclenchement (24) et/ou la coulisse (25) peuvent être entraînés par l'élément d'entraînement électrique (4) de l'élément de limitation (10) pour limiter la course d'actionnement (9) du levier de changement de vitesse (3).

9. Dispositif de commande selon l'une des revendications précédentes, **caractérisé en ce que** l'élément de retenue (22) comprend un levier pivotant (26).

10. Dispositif de commande selon l'une des revendications précédentes, **caractérisé en ce que** l'actionnement de l'élément de limitation (10) lors du déplacement du levier de changement de vitesse (3) est bloqué dans une position déterminée ou dans plusieurs positions déterminées et/ou dans une zone de positionnement déterminée ou dans plusieurs zones de positionnement déterminées.

11. Dispositif de commande selon la revendication 9, **caractérisé en ce que** le levier pivotant (26) peut être déplacé au moyen d'une came (23) entre un état débloquant l'élément de retenue (22) et un état bloquant l'élément de retenue (22).

12. Dispositif de commande selon la revendication 11, **caractérisé en ce que** l'élément d'entraînement (4) comprend un arbre (8) et **en ce que** la came (23) est agencée sur l'arbre (8).

13. Dispositif de commande selon la revendication 12, **caractérisé en ce que** l'élément de limitation (10) est conçu comme un excentrique pouvant pivoter avec l'arbre (8).
